Europäisches Patentamt

European Patent Office

Office européen des brevets

(11) Veröffentlichungsnummer : **0 423 488 B1**

(12) **EUROPÄISCHE PATENTSCHRIFT**

(19)

(45) Veröffentlichungstag der Patentschrift :
01.03.95 Patentblatt 95/09

(51) Int. Cl.⁶ : **G01N 21/61**

(21) Anmeldenummer : **90117684.2**

(22) Anmeldetag : **13.09.90**

(54) **Messanordnung und Verfahren zur Bestimmung der Konzentration einer Komponente eines Messgases vor und nach dessen Durchgang durch einen konzentrationsverändernden Reaktor.**

(30) Priorität : **28.09.89 DE 3932483**

(43) Veröffentlichungstag der Anmeldung :
**24.04.91 Patentblatt 91/17**

(45) Bekanntmachung des Hinweises auf die
Patenterteilung :
**01.03.95 Patentblatt 95/09**

(84) Benannte Vertragsstaaten :
**DE DK FR GB NL**

(56) Entgegenhaltungen :
**EP-A- 0 093 939**
**DE-A- 1 598 893**
**DE-A- 3 524 189**

(73) Patentinhaber : **SIEMENS**
**AKTIENGESELLSCHAFT**
**Wittelsbacherplatz 2**
**D-80333 München (DE)**

(72) Erfinder : **Aidam, Eckhard**
**Ulmenstrasse 7**
**D-6729 Jockgrim (DE)**
Erfinder : **Weinel, Johann**
**Bärenweg 26. 68**
**D-7500 Karlsruhe 21 (DE)**
Erfinder : **Kimmig, Ludwig, Dipl.-Ing.**
**Sophienstrasse 250**
**D-7500 Karlsruhe 21 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Meßanordnung und Verfahren zur Bestimmung der Konzentration einer Komponente eines Meßgases vor und nach dessen Durchgang durch einen konzentrationsverändernden Reaktor

Die Erfindung bezieht sich auf eine Meßanordnung und Verfahren zur simultanen Bestimmung der Konzentration einer Komponente in einem Meßgas vor und nach dessen Durchgang durch einen konzentrationsverändernden Reaktor mittels nichtdispersiver Infrarot-(NDIR)-Gasanalyse.

Die Wirksamkeit von konzentrationsändernden Reaktoren, z. B. sogenannter Katalysatoren in Abgasleitungen von Brennkraftmaschinen, ist während der Entwicklung zu prüfen und in der Praxis in gewissen Zeitabständen zu überwachen. Dies läßt sich mit Hilfe einer NDIR-Gasanalyse durchführen, indem ein erster Gasanalysator die Konzentration der bestimmten Komponente des Meßgases vor Eintritt in den Reaktor und ein zweiter Gasanalysator die Konzentration nach Austritt aus dem Reaktor mißt, aus den praktisch gleichzeitig gewonnenen Meßsignalen wird durch Quotienten- oder Differenzbildung ein Maß für die Wirksamkeit des Reaktors gewonnen. Diese Methode bedingt jedoch einen relativ hohen gerätetechnischen und dem entsprechend wartungs- und bedienungsmäßigen Aufwand.

Die Erfindung, wie sie in den Ansprüchen gekennzeichnet ist, löst die Aufgabe, eine Meßanordnung der eingangs genannten Art mit geringerem apparativen und wartungsmäßigem Aufwand und ein Verfahren zur vereinfachten Bedienung dieser Meßanordnung zu schaffen.

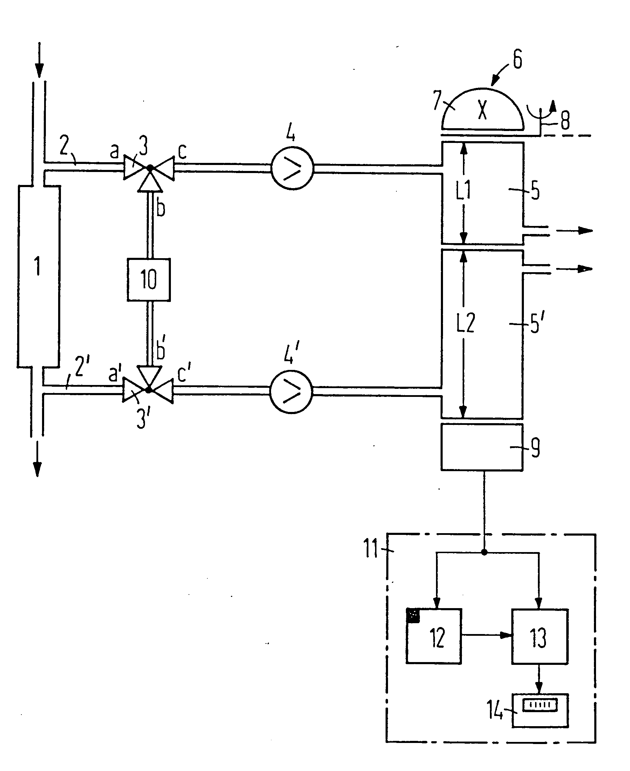

In der Figur ist ein Beispiel einer derartigen Meßanordnung schematisch dargestellt und ihr Aufbau und ihre Betriebsweise im folgenden beschrieben.

Einem Reaktor 1 wird ein Gasgemisch, im folgenden kurz Meßgas genannt, zugeführt, beispielsweise das Abgas einer Brennkraftmaschine. In dem Reaktor wird durch katalytisch unterstützte Reaktion eine bestimmte Komponente des Meßgases, beispielsweise Kohlenmonoxyd CO, möglichst weitgehend entfernt. Am Eingang des Reaktors zweigt eine Gasleitung 2 ab, die über ein Umschaltventil 3 mit den Eingängen a, b und dem Ausgang c und eine Pumpe 4 einer ersten Meßküvette 5 eines NDIR-Gasanalysators 6 vom Einstrahltyp zugeführt wird, dessen Wirkungsweise als bekannt vorausgesetzt wird und der im wesentlichen aus einer IR-Strahlungsquelle 7 einer rotierenden, den Strahlengang unterbrechenden Umlaufblende 8, Meßküvetten 5, 5′ und einem selektiven Detektor 9 besteht.

Vom Ausgang des Reaktors 1 zweigt eine zweite Gasleitung 2′ ab, die ebenfalls über ein Umschaltventil 3′ mit den Eingängen a′, b′ und dem Ausgang c′ und eine Pumpe 4′ in eine Meßküvette 5′ des NDIR-Gasanalysators 6 führt. Die erste Meßküvette 5 weist die effektive Länge $l_1$, die zweite Meßküvette 5′ die effektive Länge $l_2$ auf, wobei wegen der unterschiedlichen Konzentrationen der Komponente in den Küvetten 5 und 5′ $l_2 > l_1$ ist. An den zweiten Eingängen b und b′ der Umschaltventile 3 und 3′ ist eine Spülgasquelle 10 angeschlossen; das Spülgas kann beispielsweise aus Luft bestehen.

Meßwertverarbeitung und Auswertung erfolgt in einer an den COselektiven Detektor 9 angeschlossenen Auswerteschaltung 11, die im wesentlichen aus einem Meßwertspeicher 12, einem Rechner 13 und einem Meßwertanzeiger 14 besteht.

Zur Ermittlung der Anteile der Komponente CO im Meßgas vor und nach dem Durchgang durch den Reaktor 1 wird folgendermaßen verfahren: Beide Ventile 3 und 3′ sind in der Ventilstellung a - c bzw. a′ - c′, die Pumpen 4 und 4′ sind in Betrieb, so daß durch die Gasleitung 2 am Eingang des Reaktors 1 entnommenes Meßgas durch die Meßküvette 5 und über die Gasleitung 2′ am Ausgang des Reaktors entnommenes Meßgas durch die Meßküvette 5′ strömt. Das der Infrarotabsorption in beiden Meßküvetten 5, 5′ entsprechende Ausgangssignal ist eine Funktion der Beziehung

$$C_1 \cdot l_1 + C_2 \cdot l_2,$$

wobei $l_1$ und $l_2$ die effektiven Längen der Meßküvetten 5 bzw. 5′ und $C_1$ und $C_2$ die Konzentrationen der bestimmten Komponente in den Meßküvetten 5 und 5′ sind. Dieses Summensignal wird in dem Speicher 12 gespeichert. In einem folgenden Schritt wird die Meßgaszufuhr in die erste Meßküvette 5 unterbrochen, indem das Umschaltventil 3 in die Schaltstellung b - c umgeschaltet und an die Spülgasquelle 10 angeschlossen wird. Gleichzeitig wird die Pumpe 4′ abgeschaltet. Die Küvette 5 wird so mit einem nicht IR-absorbierenden Gas gespült. Das Ausgangssignal des Detektors entspricht nunmehr der Funktion $C_2 \cdot l_2$, es wird ebenfalls gespeichert und in dem Rechner 13 bei bekannter effektiver Küvettenlänge $l_2$ die Konzentration $C_2$ errechnet. Durch Differenzbildung mit dem abspeicherten Summensignal $C_1 \cdot l_1 + C_2 \cdot l_2$ wird ein dem Produkt $C_1 \cdot l_1$ entsprechender Wert gebildet und daraus bei ebenfalls bekannter effektiver Küvettenlänge $l_1$ der Konzentrationswert $C_1$ errechnet. In dem Meßwertanzeiger 14 kann dann die CO-Konzentration im Meßgas, entsprechend dem Wert $C_1$, vor dem Reaktor 1 oder die Konzentration nach Durchgang durch den Reaktor 1 oder das die Wirksamkeit des Reaktors bezeichnende Verhältnis $C_1/C_2$ angezeigt werden.

Die Meßanordnung kann auch so betrieben werden, daß statt der Unterbrechung der Meßgaszufuhr zu der ersten Meßküvette 5 und Spülung derselben in entsprechender Weise die Meßgaszufuhr zur Küvette 5′ und Spülung derselben vorgenommen werden kann mit entsprechender Umkehrung der Berechnungen.

## Patentansprüche

1. Meßanordnung zur Bestimmung der Konzentration einer Komponente eines Meßgases am Eingang und am Ausgang eines die Konzentration der Komponente verändernden Reaktors mit einem NDIR-Gasanalysator (6), der eine IR-Strahlungsquelle (7) und einen für die Komponente selektiven Detektor (9) enthält, **gekennzeichnet durch**

   a) eine vom Eingang des Reaktors (1) abzweigende Gasleitung (2), die über ein Umschaltventil (3), das einen ersten Ein- und Ausgang aufweist, und eine Pumpe (4) in eine erste Meßküvette (5) führt;

   b) eine vom Ausgang des Reaktors (1) abzweigende Gasleitung (2'), die über ein Umschaltventil (3'), das einen ersten Ein- und Ausgang aufweist, und eine Pumpe (4') zu einer koaxial hinter der ersten Küvette (5) im Strahlengang angeordneten zweiten Meßküvette (5') führt, wobei beide Küvetten zwischen der IR-Strahlungsquelle (7) und dem Detektor (9) angeordnet sind;

   c) eine an einen zweiten Eingang (b, b') der Umschaltventile (3, 3') angeschlossene Spülgasquelle (10);

   d) eine an den Ausgang des Detektors (9) angeschlossene Auswerteschaltung (11), bestehend aus Meßwertspeicher (12) Rechner (13) und Meßwertanzeiger (14).

2. Verfahren zum Betrieb der Meßanordnung nach Anspruch 1, **gekennzeichnet durch** folgende Schritte:

   a) das am Eingang des Reaktors (1) entnommene Meßgas durchströmt die erste Meßküvette (5) und das am Ausgang des Reaktors (1) entnommene Meßgas die zweite Meßküvette (5');

   b) das der IR-Absorption in beiden Meßküvetten entsprechende Ausgangssignal des für die Komponente selektiven Detektors (9) des NDIR-Analysators (6) wird gespeichert, es entspricht der Beziehung

   $$C_1 \cdot l_1 + C_2 \cdot l_2,$$

   wobei $l_1$ die effektive Länge der ersten Meßküvette (5), $l_2$ die effektive Länge der zweiten Meßküvette (5'), $C_1$ und $C_2$ die jeweilige Konzentration der Komponente in den Meßküvetten (5 bzw. 5') ist;

   c) der Meßgasstrom zur ersten oder zur zweiten Küvette (5 und 5') wird unterbrochen und der ersten bzw. der zweiten Meßküvette (5 oder 5') wird nichtabsorbierendes Spülgas zugeführt;

   d) das Ausgangssignal des Detektors (9), das der Funktion $C_2 \cdot l_2$ bzw. $C_1 \cdot l_1$ entspricht wird gespeichert;

   e) aus dem Produkt $C_2 \cdot l_2$ bzw. $C_1 \cdot l_1$ wird bei bekannten Küvettenlängen $l_1$ oder $l_2$ die Konzentration $C_2$ bzw. $C_1$ errechnet;

   f) durch Differenzbildung mit dem abgespeicherten Signal nach Merkmal b) wird eine dem Produkt $C_1 \cdot l_1$ oder $C_2 \cdot l_2$ entsprechende Größe gebildet und daraus bei bekannten Küvettenlängen $l_1$ bzw. $l_2$ die Konzentrationen $C_1$ bzw. $C_2$ errechnet.

## Claims

1. Measuring arrangement for determining the concentration of a component of a measurement gas at the input and at the output of a reactor, which changes the concentration of the component, the arrangement having an NDIR-gas analyzer (6) which contains an infrared radiation source (7) and a selective detector (9) for the component, characterised by

   a) a gas line (2) which branches off from the input of the reactor (1) and which by way of a switch-over valve (3), which has a first input and an output, and a pump (4) leads into a first measuring cuvette (5);

   b) a gas line (2') which branches off from the output of the reactor (1) and which by way of a switch-over valve (3'), which has a first input and an output, and a pump (4') leads to a second measuring cuvette (5') coaxially arranged downstream of the first cuvette (5) in the beam path, with both cuvettes being arranged between the infrared radiation source (7) and the detector (9);

   c) a purging gas source (10) which is connected to a second input (b, b') of the switch-over valves (3, 3');

   d) an evaluating circuit arrangement (11) which is connected to the output of the detector (9) and consists of measured value memory (12), computer (13) and measured value indicator (14).

2. Method for the operation of the measuring arrangement according to claim 1, characterised by the following steps:

   a) the measurement gas withdrawn at the input of the reactor (1) flows through the first measuring cuvette (5) and the measurement gas withdrawn at the output of the reactor (1) flows through the second measuring cuvette (5');

   b) the output signal of the detector (9), which is selective for the component, of the NDIR-analyzer (6), said signal corresponding to the infrared-absorption in the two measuring cuvettes, is stored and corresponds to the relationship

$$C_1 . l_1 + C_2 . l_2,$$

where $l_1$ is the effective length of the first measuring cuvette (5), $l_2$ is the effective length of the second measuring cuvette (5'), $C_1$ and $C_2$ are the respective concentrations of the component in the measuring cuvettes (5 and 5' respectively);

c) the measurement gas flow to the first or to the second cuvette (5 and 5') is interrupted and non-absorbing purging gas is supplied to the first or to the second measuring cuvette (5 or 5') respectively;

d) the output signal of the detector (9), which corresponds to the function $C_2 . l_2$ or $C_1 . l_1$ respectively, is stored;

e) the concentration $C_2$ or $C_1$ is calculated from the product $C_2 . l_2$ or $C_1 . l_1$ respectively given known cuvette lengths $l_1$ or $l_2$;

f) by subtraction from the stored signal according to feature b) a quantity corresponding to the product $C_1 . l_1$ or $C_2 . l_2$ is formed and from this the concentration $C_1$ or $C_2$ respectively is calculated given known cuvette lengths $l_1$ and $l_2$.

## Revendications

1. Dispositif de mesure pour déterminer la concentration d'un constituant d'un gaz de mesure à l'entrée et à la sortie d'un réacteur modifiant la concentration des constituants, avec un analyseur de gaz NDIR (6), qui contient une source de rayonnement infrarouge (7) et un détecteur (9) sélectif pour le constituant, caractérisé par

   a) une conduite de gaz (2), qui s'étend en dérivation à partir de l'entrée du réacteur (1) et aboutit, par l'intermédiaire d'une soupape de commutation (3), qui possède une première entrée et une première sortie, et par l'intermédiaire d'une pompe (4) à une première cuvette de mesure (5);

   b) une conduite de gaz, qui s'étend en dérivation à partir de la sortie du réacteur (1) et qui aboutit, par l'intermédiaire d'une soupape de commutation (3'), qui possède une première entrée et une première sortie, et d'une pompe (4') à une seconde cuvette de mesure (5') disposée coaxialement et en arrière de la première cuvette (5) dans le trajet du rayonnement; les deux cuvettes étant disposées entre la source de rayonnement infrarouge (7) et le détecteur (9);

   c) une source de gaz de balayage (10) raccordée à une seconde entrée (b,b') des soupapes de commutation (3,3');

   d) un circuit d'évaluation (11), qui est raccordé à la sortie du détecteur (9) et est constitué par une mémoire (12) de valeurs de mesure, un ordinateur (13) et un dispositif (14) d'affichage des valeurs de mesure.

2. Procédé pour faire fonctionner le dispositif de mesure suivant la revendication 1, caractérisé par les étapes opératoires suivantes :

   a) le gaz de mesure prélevé à l'entrée du réacteur (1) circule dans la première cuvette de mesure (5) et le gaz de mesure prélevé à la sortie du réacteur (1) traverse la seconde cuvette de mesure (5');

   b) le signal de sortie, qui correspond à l'absorption du rayonnement infrarouge dans les deux cuvettes de mesure, du détecteur (9), sélectif du point de vue du constituant, de l'analyseur NDIR (6) est mémorisé, le signal correspondant à la relation

   $$C_1 . l_1 + C_2 . l_2,$$

   $l_1$ représentant la longueur effective de la première cuvette de mesure (5), $l_2$ la longueur effective de la seconde cuvette de mesure (5'), $C_1$ et $C_2$ la concentration respective du constituant de la cuvette de mesure (5 ou 5');

   c) le courant de gaz de mesure envoyé à la première ou à la seconde cuvette (5,5') étant interrompu et un gaz de balayage non absorbant est envoyé à la première ou la seconde cuvette de mesure (5 ou 5');

   d) le signal de sortie du détecteur (9), qui correspond à la fonction $C_2.l_2$ ou $C_1.l_1$, est mémorisé;

   e) pour des longueurs connues $l_1$ ou $l_2$ des cuvettes, on calcule la concentration $C_2$ ou $C_1$ à partir des produits $C_2 . l_2$ ou $C_1 . l_1$;

   f) par formation de la différence avec le signal mémrosé conformément à la caractéristique b), on forme une grandeur qui correspond au produit $C_1.l_1$ ou $C_2.l_2$ et les concentrations $C_1$ et $C_2$ sont calculées, à partir de là, pour des longueurs connues $l_1$ et $l_2$ des cuvettes.